# EUROPÄISCHE PATENTSCHRIFT

(11) **EP 0 874 960 B1**
(45) Veröffentlichungstag und Bekanntmachung des Hinweises auf die Patenterteilung: **15.03.2000**
(21) Anmeldenummer: 96945364.6
(22) Anmeldetag: 20.12.1996
(51) Int. Cl.: F16H 7/18, B65G 39/16

(54) **EINRICHTUNG ZUR RIEMENLAUFKORREKTUR**
DEVICE FOR CORRECTING THE COURSE OF A BELT
DISPOSITIF POUR CORRIGER LA COURSE D'UNE COURROIE

(30) Priorität: 16.01.1996 DE 19601255
(43) Veröffentlichungstag der Anmeldung: 04.11.1998
(73) Patentinhaber: SIEMENS AKTIENGESELLSCHAFT, 80333 München (DE)
(72) Erfinder: LOOSE, Jochen, D-78465 Konstanz (DE); SCHAAL, Falk, D-72275 Alpirsbach (DE)
(86) Internationale Anmeldenummer: EP9605763
(87) Internationale Veröffentlichungsnummer: WO9726470

(56) Entgegenhaltungen:
- WO-A-89/02042
- CH-A- 686 507
- US-A- 3 075 633
- US-A- 5 471 289

## Beschreibung

Die Erfindung betrifft eine Einrichtung zur Riemenlaufkorrektur gemäß Oberbegriff des 1. Patentanspruches.
Eine wichtige Anforderung an den Riemenlauf ist die Vermeidung des Herunterlaufens des Riemens von den Umlenk- und Antriebsrollen.
Da der Riemen versucht, immer auf dem höchsten Punkt einer Rolle zu laufen, setzt man meist ballige Rollen ein, die den Riemen zentrieren. Vor allem bei längeren Riemenläufen ist es jedoch nicht auszuschließen, daß Störeinwirkungen - z. B. schrägstehende Rollen, verzogene Riemen - versuchen, den Riemen von den Rollen zu schieben.

Es ist bekannt, zur Kompensation dieser Störeinflüsse sich in ihrer Neigung verstellbare Umlenkrollen, sogenannte Stellrollen, einzusetzen (DE-PS 1965023). Der Achskörper ist um eine quer zur Rollenachse liegende Drehachse schwenkbar, wobei die Schwenklage des Achskörpers durch eine Stellschraube bzw. einen Gewindebolzen gesichert ist. Bei jeder Änderung im Riemenlauf muß die Neigung der Stellrolle manuell neu eingestellt werden. Dies hat einen erhöhten Wartungs- und Betreuungsaufwand zur Folge.

Der Erfindung liegt daher die Aufgabe zugrunde, eine automatische Neigungseinstellung von Stellrollen zu schaffen, bei der der außermittige Riemenlauf auf der Stellrolle automatisch korrigiert wird.

Die Aufgabe wird erfindungsgemäß durch die Merkmale des Patentanspruchs 1 gelöst. Der Vorteil besteht hierbei darin, daß die Drehmomentenänderung an der Drehachse DA1, um die die Stellrolle geschwenkt wird, infolge des außermittigen Riemenlaufes (veränderter Hebelarm) eine solche Neigung der Stellrolle hervorruft, daß der Riemen an der Rolle eine Bewegungskomponente zur Rollenmitte hin erhält.
In einer vorteilhaften Auskleidung der Erfindung gemäß Patentanspruch 2 werden Einflüsse einer sich ändernden Riemenspannung mit Hilfe einer an einem schwenkbaren Hebel befestigten Referenzrolle ausgeglichen.

Diese Referenzrolle wird mittels des gleichen Federelementes über den Hebel gegen den Riemen gedrückt. Federelement und Hebelarme sind so dimensioniert, daß z. B. eine verringerte Riemenspannung durch die Auslenkungsänderung der Referenzrolle eine im gleichen Verhältnis verringerte auf die Stellrolle wirkende Federkraft zur Folge hat. Günstigerweise ist die Federkraft des Federelements entsprechend Patentanspruch 3 einstellbar. Weiterhin ist es vorteilhaft, die Stell- und Referenzrollen gemäß Patentanspruch 4 ballig auszuführen.
Es hat sich außerdem als günstig erwiesen, den Umschlingungswinkel an der Stellrolle gemäß Patentanspruch 5 in einem Bereich von ca. 6° bis 25° auszuführen.
In einer weiteren vorteilhaften Ausführung der Erfindung ist die Riemenlaufkorrektureinrichtung gegenüber der tangentialen Richtung des Riemens an der Stellrolle auf der Riemenauslaufseite um ca. 30° bis 60° schräggestellt.

In einem Beispiel wird die Erfindung anhand der Zeichnungen näher erläutert.
Dabei zeigen
- Fig. 1: eine perspektivische schematische Darstellung einer erfindungsgemäßen Einrichtung
- Fig. 2: eine Draufsicht auf die erfindungsgemäße Einrichtung gemäß Fig. 1
- Fig. 3: eine Seitenansicht - Ansicht A - der erfindungsgemäßen Einrichtung gemäß Fig. 1 und 2 mit den Varianten
a) mittiger Riemenlauf
b) nach unten abgelenkter Riemen
c) nach oben abgelenkter Riemen

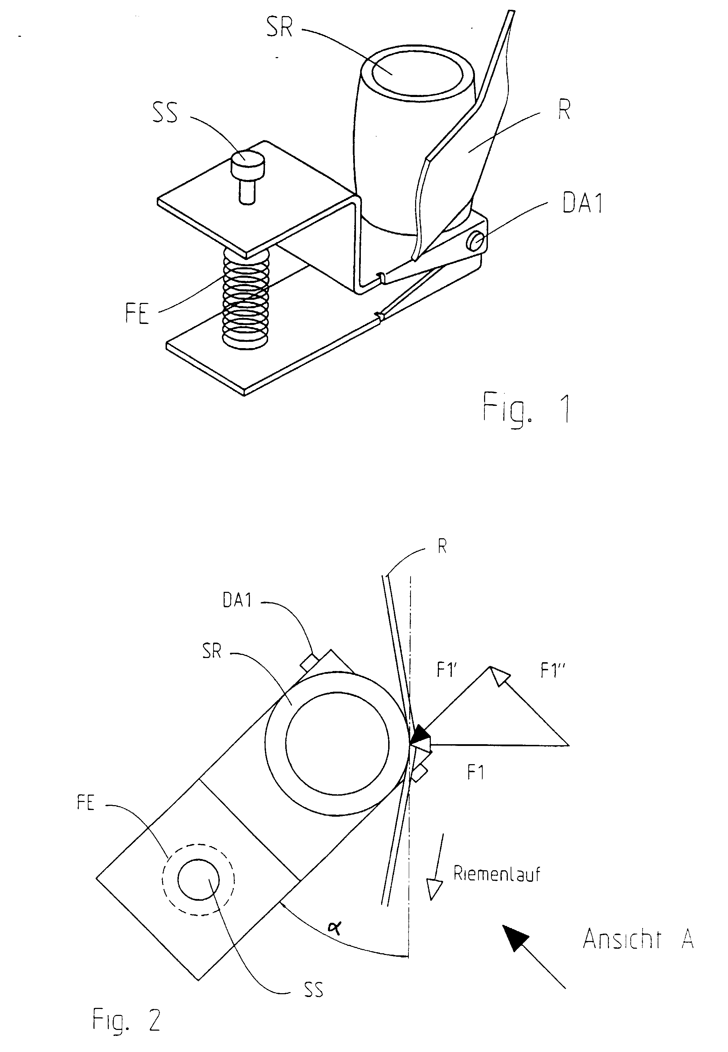

Gemäß Fig. 1 ist eine ballige Stellrolle SR, an der der Riemen R vorbeigeführt wird, um eine Drehachse DA1 schwenkbar gelagert.
Die Balligkeit der Rollen bewirkt, daß sich der Riemen bei kleinen Abweichungen von mittigen Lauf auf den Rollen selbst zentriert. Werden die Abweichungen größer, so ist die erfindungsgemäße Einrichtung notwendig, bei der die Stellrolle SR über einen Hebelarm von einem Federelement FE abgestützt wird. Die Balligkeit der Stellrolle SR ist für die Funktion der Einrichtung nicht notwendig, verbessert aber die Laufruhe bei sehr kleinen Abweichungen. Mit einer Stellschraube SS läßt sich die Federkraft F2 verändern und somit die Neigung der Stellrolle SR justieren.
Der Umschlingungswinkel des Riemens R an der Stellrolle SR hat einen vorteilhaften Bereich von ca. 6° bis 25°.

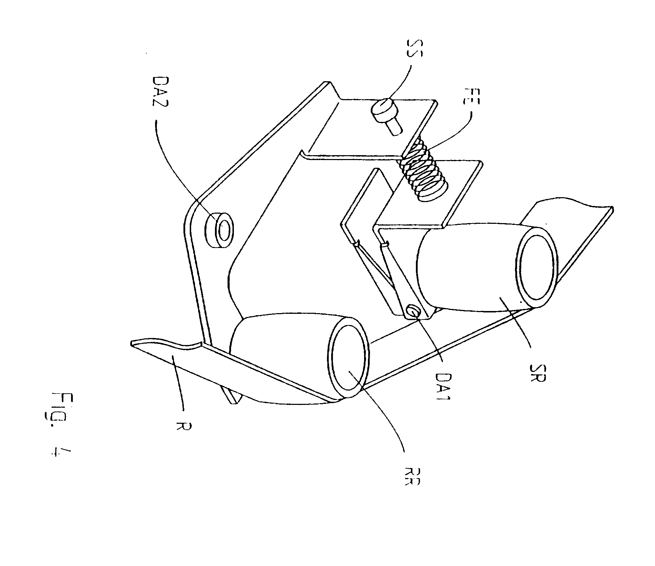

Gemäß der Fig. 2 ist die Riemenlaufkorrektureinrichtung gegenüber der tangentialen Richtung des Riemens R an der Stellrolle SR auf der Riemenauslaufseite um den Winkel α von ca. 45° schräggestellt. Eine Schrägstellung im Bereich von 30° bis 60° hat sich ebenfalls als besonders vorteilhaft für das Regelverhalten gezeigt.
Tangentiale Richtung des Riemens R an der Stellrolle SR ist die Richtung, bei welcher der Winkel zwischen dieser tangentialen Richtung und der Richtung des ein- und auslaufenden Bandes jeweils gleich ist.
Der Riemen R drückt an die Stellrolle SR mit der Kraft F1, gemäß des dargestellten Kräftedreiecks wirkt dann in der Neigungsrichtung die Kraft F1'.

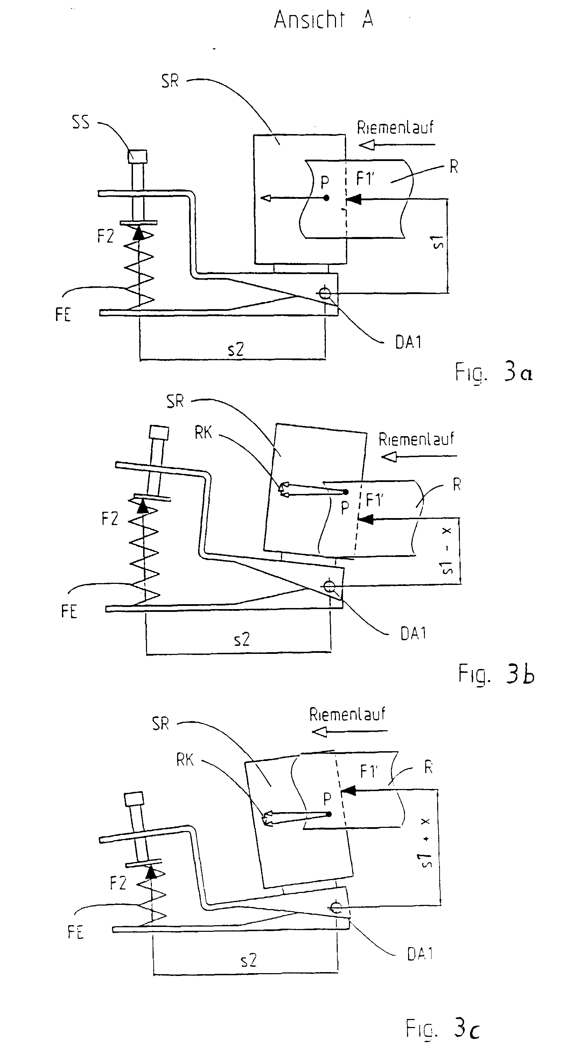

In der Fig. 3 a - c, die eine Seitenansicht A gemäß Fig. 2 zeigt, ist die Funktion der erfindungsgemäßen Einrichtung mit einer geraden Rolle näher erläutert.
Gemäß der Fig. 3 a wird bei mittigem Riemenlauf über die vom Riemen R erzeugte Kraftkomponente F1' und einen Hebelarm, dessen Länge dem Abstand zwischen Drehachse DA1 und Mitte der Stellrolle in Längsrichtung s1 entspricht, ein linksdrehendes Moment an der Drehachse DA1 erzeugt. Durch die Federkraft F2 des Federelements FE und den Hebelarm mit der wirksamen Länge s2 entsteht ein rechtsdrehendes Moment, welches das System im Gleichgewicht hält.
Läuft infolge einer Störung der Riemen R nach unten weg (Fig. 3 b), verringert sich der Hebelarm an der Stellrolle um den Betrag x auf S1 - x. Das rechtsdrehende Moment, hervorgerufen von der Federkraft F2 und dem Hebelarm mit der wirksamen Länge s2 ist somit größer als das linksdrehende und die Stellrolle SR kippt nach rechts. Durch die gewählte Schrägstellung der erfindungsgemäßen Einrichtung zum Riemenlauf erhält jeder die Stellrolle berührende Punkt P des Riemens R an der Mantelfläche der Stellrolle SR eine Richtkomponente RK nach oben, wodurch die Störung kompensiert wird.
Läuft der Riemen nach oben weg (Fig. 3 c), vergrößert sich der Hebelarm an der Stellrolle SR um den Betrag x auf s1 + x. Dadurch erhöht sich das linksdrehende Moment und die Rolle kippt nach links. Aufgrund der Riemenlaufrichtung und der Schrägstellung der erfindungsgemäßen Einrichtung zum Riemenlauf berührt der Riemen R die Stellrolle SR nur an den Stellen, an denen er eine Richtkomponente RK nach unten erhält. Dadurch wird der Riemen R der Riemenlaufstörung entgegengesetzt nach unten gezogen. Läßt die Riemenspannkraft im Laufe der Zeit nach und erfolgt kein Ausgleich im Riemenlauf, so wird die Kraft F1 bzw. F1' ebenfalls kleiner. Dadurch wird das erforderliche Momentengleichgewicht gestört und die Stellrolle SR kippt nach rechts.
Macht man jedoch auch das rechsdrehende Moment von der Riemenspannkraft abhängig, dann verringern sich bei nachlassender Riemenspannkraft beide Momente. Das Verhältnis der beiden Drehmomente bleibt somit erhalten und das Momentengleichgewicht wird nicht gestört.
Aus diesem Grund wird gemäß Fig. 4 das rechtsdrehende Moment über eine Referenzrolle RR erzeugt. Die Referenzrolle RR befindet sich auf einem in der Drehachse DA2 drehbaren Hebelarm, der ebenfalls mit dem Federelement FE verbunden ist. Bei nachlassender Riemenspannung verändert sich sowohl die Kraft F1', die auf die Stellrolle SR wirkt, als auch die Kraft, die auf die Referenzrolle RR ausgeübt wird. Bei richtiger Auslegung des Federelements FE sowie der Hebelverhältnisse verändern sich beide Drehmomente im gleichen Verhältnis und das Momentengleichgewicht bleibt erhalten, d. h. die Stellrolle SR kippt nicht. Läuft der Riemen nach oben oder unten weg, wirkt sich nur der veränderte wirksame Hebelarm an der Stellrolle SR s1 ± x auf das Momentangleichgewicht aus und die Funktion bleibt auch bei veränderter Riemenspannung erhalten.

## Patentansprüche

1. Einrichtung zur Riemenlaufkorrektur, insbesondere für Sendungsverteilanlagen, mit einer in ihrer Neigung zu einer Drehachse (DA1) verstellbaren, drehbaren Stellrolle, dadurch gekennzeichnet,
daß über einen Hebelarm der Stellrollenbefestigung und eine an diesen angreifende, von einem Federelement (FE) erzeugte Federkraft (F) ein Drehmoment an der Drehachse (DA1) der Stellrollenbefestigung zur Neigungsverstellung erzeugt wird, wobei Hebelarm und Federkraft so dimensioniert und gerichtet sind, daß das durch die Riemenspannung bei mittigem Riemenlauf über die Stellrolle (SR) auf die Stellrollenbefestigung ausgeübte Drehmoment in Neigungsrichtung kompensiert wird und daß der Umschlingungswinkel an der Stellrolle (SR), deren Neigungsrichtung, die Riemenlaufrichtung, die tangentiale Richtung des Riemens (R) an der Stellrolle (SR) sowie Federweg und -kennlinie des Federelements (FE) so gewählt sind, daß bei der Neigung der Stellrolle (SR) infolge der Momentenänderung durch außermittigen Riemenlauf der Riemen (R) an der Stellrolle (SR) eine Richtungskomponente entgegen der außermittigen Auslenkungsrichtung erhält.

2. Einrichtung nach Anspruch 1,
dadurch gekennzeichnet,
daß eine drehbare, neigungsstarre Referenzrolle (RR) an einem schwenkbaren Hebel befestigt ist, der die Referenzrolle (RR) durch eine an diesen Hebel angreifende Federkraft gegen den Riemen (R) drückt, daß die Federkraft durch das Federelement (FE) erzeugt wird, das auch die am Hebelarm der Stellrollenbefestigung angreifende Federkraft erzeugt, wobei beide Kräfte am Federelement (FE) in entgegengesetzter Richtung wirken und daß das Federelement (FE) und die Hebel so dimensioniert sind, daß die Riemenspannungsänderungen das Momentengleichgewicht an der Stellrollenbefestigung nicht stören.

3. Einrichtung nach Anspruch 1 und 2,
dadurch gekennzeichnet,
daß die Federkraft des Federelementes (FE) einstellbar ist.

4. Einrichtung nach Anspruch 1 und 2,
dadurch gekennzeichnet,
daß die Rollen (SR, RR) ballig ausgeführt sind.

5. Einrichtung nach Anspruch 1,
dadurch gekennzeichnet,
daß der Umschlingungswinkel an der Stellrolle (SR) in einem Bereich von ca. 6° bis 25° liegt.

6. Einrichtung nach Anspruch 1,
dadurch gekennzeichnet,
daß die erfindungsgemäße Einrichtung gegenüber der tangentialen Richtung des Riemens (R) an der Stellrolle (SR) auf der Riemenauslaufseite um ca. 30° bis 60° schräg gestellt ist.

## Claims

1. Device for correcting a belt run, in particular for mail distribution systems, having an actuating roller which can rotate and whose inclination to an axis of rotation (DA1) is adjustable, characterized in that in order to adjust the inclination, a torque on the axis of rotation (DA1) of the actuating-roller fixing is produced via a lever arm on the actuating-roller fixing and a spring force (F) produced by a spring element (FE), the lever arm and spring force being dimensioned and oriented such that the torque exerted on the actuating-roller fixing by the belt tension when the belt runs centrally over the actuating roller (SR) is compensated for in the direction of inclination, and in that the wrap angle around the actuating roller (SR), the direction of inclination of the latter, the belt run direction, the tangential direction of the belt (R) on the actuating roller (SR) and the spring travel and the spring characteristic of the spring element (FE) are chosen such that, in the event of any inclination of the actuating roller (SR) as a result of the torque change caused by the belt run being off-centre, the belt (R) on the actuating roller (SR) is given a directional component counter to the off-centre deflection direction.

2. Device according to Claim 1, characterized in that a reference roller (RR) which can rotate and which is rigidly fixed against inclination is fixed to a lever which can pivot and which, as a result of a spring force acting on this lever, presses the reference roller (RR) against the belt (R), in that the spring force is produced by the spring element (FE) which also produces the spring force acting on the lever arm of the actuating-roller fixing, the two forces acting on the spring element (FE) in opposite directions, and in that the spring element (FE) and the lever are dimensioned such that the belt-tension changes do not upset the torque equilibrium on the actuating-roller fixing.

3. Device according to Claim 1 and 2, characterized in that the spring force of the spring element (FE) is adjustable.

4. Device according to Claim 1 and 2, characterized in that the rollers (SR, RR) are of spherical design.

5. Device according to Claim 1, characterized in that the wrap angle on the actuating roller (SR) is in the range from about 6° to 25°.

6. Device according to Claim 1, characterized in that the device according to the invention is positioned obliquely at about 30° to 60° to the tangential direction of the belt (R) on the actuating roller (SR), on the belt exit side.

## Revendications

1. Dispositif pour corriger la course d'une courroie, notamment dans des installations de distribution d'envoi, comportant un galet de réglage tournant, dont l'inclinaison par rapport à l'axe (DA1) de rotation peut être réglée, caractérisé en ce qu'un couple de rotation sur l'axe (DA1) de la fixation du galet de réglage est produit par rapport au déplacement de l'inclinaison par l'intermédiaire d'un bras de levier de la fixation du galet de réglage et par l'intermédiaire d'une force (F) élastique qui attaque ce bras de levier et qui est produite par un élément (FE) élastique, le bras de levier et la force élastique étant prévus et dirigés de manière que le couple de rotation exercé sur la fixation du galet de réglage par la tension de la courroie lors du passage de la courroie au milieu sur le galet (SR) de réglage est compensé dans la direction d'inclinaison, et que l'angle d'enroulement sur le galet (SR) de réglage, sa direction d'inclinaison, la direction de passage de la courroie, la direction tangentielle de la courroie (R) sur le galet (SR) de réglage ainsi que l'allongement du ressort et la courbe caractéristique du ressort de l'élément (FE) élastique sont choisis de telle manière que, lors de l'inclinaison du galet (SR) de réglage à la suite de la variation de couple en raison d'un passage de la courroie en dehors du milieu, la courroie (R) sur le galet (SR) de réglage reçoit une composante directionnelle à l'opposé du sens de déviation en dehors du milieu.

2. Dispositif suivant la revendication 1, caractérisé en ce qu'un galet (RR) de référence tournant, rigide à l'inclinaison, est fixé à un levier pivotant qui presse le galet (RR) de référence sur la courroie (R) par une force élastique attaquant ce levier, en ce que la force élastique est produite par l'élément (FE) élastique qui produit aussi la force élastique attaquant le bras de levier de la fixation du galet de réglage, les deux forces agissant sur l'élément (FE) élastique en sens opposé, et en ce que l'élément (FE) élastique et le levier ont des dimensions telles que les variations de tension de la courroie ne portent pas atteinte à l'équilibre des couples sur la fixation du galet de réglage.

3. Dispositif suivant la revendication 1 et 2, caractérisé en ce que la force élastique de l'élément (FE) élastique peut être réglée.

4. Dispositif suivant la revendication 1 et 2, caractérisé en ce que les galets (SR, RR) sont réalisés de manière bombée.

5. Dispositif suivant la revendication 1, caractérisé en ce que l'angle d'enroulement sur le galet (SR) de réglage est compris entre environ 6° et 25°.

6. Dispositif suivant la revendication 1, caractérisé en ce que le dispositif suivant l'invention est placé en biais du côté de sortie de la courroie d'environ 30° à 60° par rapport à la direction tangentielle de la courroie (R) sur le galet (SR) de réglage.
